# EUROPÄISCHE PATENTSCHRIFT

(11) **EP 0 897 853 B1**
(45) Veröffentlichungstag und Bekanntmachung des Hinweises auf die Patenterteilung: **24.11.2004**
(21) Anmeldenummer: 98115276.2
(22) Anmeldetag: 13.08.1998
(51) Int. Cl.: B62D 25/00, B62D 25/20, B62D 21/15

(54) **Kraftfahrzeug mit Verstärkungen im Bereich der B-Säule**
Motor vehicle with reinforcements in the region of B-posts
Véhicule automobile avec renforcements dans la région des montants 'B'

(30) Priorität: 16.08.1997 DE 29714656 U
(43) Veröffentlichungstag der Anmeldung: 24.02.1999
(73) Patentinhaber: Wilhelm Karmann GmbH, D-49084 Osnabrück (DE)
(72) Erfinder: Schmidt, Joachim, 49504 Lotte (DE); Brockhoff, Franz-Josef, 49191 Belm (DE); Alsago, Holger, 21640 Horneburg (DE)
(74) Vertreter: Busse & Busse Patentanwälte

(56) Entgegenhaltungen:
- EP-A- 0 354 325
- EP-A- 0 943 530
- DE-A- 19 603 098
- DE-U- 9 104 077
- DE-U- 9 111 928

## Beschreibung

Die Erfindung bezieht sich auf ein Personenkraftfahrzeug mit einer B-Säule, insbesondere Coupé- oder Cabriolet-Fahrzeug mit den Insassenraum unterhalb einer Fensterbrüstung begrenzenden seitlichen Karosseriewandungen, innerhalb deren vertikaler Erstreckung jeweils die B-Säule angeordnet ist, wobei dieser jeweils im wesentlichen vertikal ausgerichtete Verstärkungsprofile zur Aufnahme von seitlich auf das Fahrzeug einwirkenden Kräften zugeordnet ist.

Personenkraftfahrzeuge weisen grundsätzlich das Problem auf, gegen einen Anprall von der Seite relativ schlecht geschützt zu sein, da hier nur eine geringe Knautschzone zur Verfügung steht. Insbesondere Fahrzeuge, bei denen die B-Säule innerhalb der vertikalen Erstreckung einer den Insassenraum unterhalb einer Festerbrüstung begrenzenden seitlichen Karosseriewandung angeordnet ist, haben die Eigenheit, daß die B-Säule unterhalb der Fensterbrüstung endet und daher kein den Fahrzeuginnenraum überspannender Querträger - etwa in Gestalt eines Überrollbügels beim Cabriolet bzw. einer Dachanbindung der B-Säulen bei einem geschlossenen Fahrzeug - vorhanden ist. Dadurch ist die Stabilität der Seitenwandungen relativ gering, so daß im Falle eines Seitenaufpralls erhebliche Intrusionen, die die Insassen gefährden, auftreten können.

Die gattungsgemäße DE 196 03 098 A1 zeigt ein Kraftfahrzeug, das bei einer B-Säule ohne Dachanbindung dieser jeweils ein im wesentlichen vertikal ausgerichtetes Verstärkungsprofil zuordnet, wobei die einander gegenüberliegenden Verstärkungsprofile über ein das Fahrzeug quer durchziehendes Versteifungsprofil miteinander verbunden sind. Das Versteifungsprofil ist entweder einstückig oder weist bei mehrteiliger Ausbildung ein Verbindungsstück auf, das die Teile aneinander hält. In jedem Fall ist das Versteifungsprofil als geradlinige Verbindung zwischen den unteren Enden der vertikalen Verstärkungsrohre ausgebildet. Dadurch ist auch schon bei einem nur relativ leichten Seitenaufprall die gegenüberliegende Fahrzeugseite an der Verformung mit beteiligt, was die Reparaturkosten erheblich erhöht. Zudem ist bei Anprall eines höheren Fahrzeugs eine Abknickung des Vertikalrohrs möglich, so daß der Schutzmechanismus seine Wirkung nicht effizient entfalten kann.

Der Erfindung liegt das Problem zugrunde, den Seitenaufprallschutz in einem gattungsgemäßen Personenkraftfahrzeug zu verbessern.

Die Erfindung löst dieses Problem durch ein Fahrzeug mit den Merkmalen des Anspruchs 1. Weitere Vorteilhafte Ausgestaltungen sind in den Ansprüchen 2 bis 11 angegeben.

Dadurch, daß der Verbindungsbereich zwischen dem Auslegerarm und dem Verstärkungsprofil sich oberhalb von dessen unteren Ende befindet, ist der Ort der Krafteinleitung in den jeweiligen Auslegerarm nach oben verlegt. Damit geht der entscheidende Vorteil einher, daß die Krafteinleitung in den Auslegerarm nicht primär durch Biegung und sekundär durch Schub, sondern primär durch Schub und erst sekundär durch Biegung erfolgt. Dadurch hat eine Norm-Barriere zuerst Kontakt mit der Karosserie im Bereich über dem Verbindungsbereich, wodurch eine Biegekraft entsteht, die dadurch kompensiert wird, daß die Norm-Barriere bei weiterem Eindringen in die Karosserie auch den Bereich unterhalb des Verbindungsbereiches trifft. Durch die nahezu vollständige Kompensierung der Biegekräfte wird primär eine Schubkraft in die Karosserie eingeleitet.

Durch die Festlegung des Auslegerarmes oberhalb des unteren Bereiches des vertikalen Verstärkungsprofils und aufgrund der realisierbaren unterschiedlichen Höhen der Krafteinleitung ist sichergestellt, daß beispielsweise bei Kollision mit Sportwagen einerseits bzw. höheren Geländewagen andererseits wirksam Kräfte abgefangen werden können.

Durch die Teilung einer Querversteifung in Auslegerarme, die im Bereich der Fahrzeuglängsmittelebene bevorzugt zueinander beabstandet sind, ist bei einem leichten Seitenaufprall sichergestellt, daß nur eine Längsseite des Fahrzeugs von der Verformung betroffen ist.

Zweckmäßigerweise beträgt der Abstand der Auslegerarme im Bereich der Fahrzeuglängsmittelebene nur wenige Zentimeter, so daß bei einem stärkeren Aufprall die Trennfuge durch Querverlagerung eines Auslegerarmes geschlossen und auch die gegenüberliegende Fahrzeugseite an der Verformung teilnehmen kann und zum Abbau von Kraftspitzen dient. Die einander benachbarten Enden der Auslegerarme können dabei flanschartig ausgebildet sein, um eine vergrößerte Kontaktfläche zu bilden.

Bei seitlichen Kollisionen mit relativ geringer Aufprallenergie bleiben die Reparaturkosten dadurch gering, daß die Karosserie nur einseitig verformt wird. Beispielsweise kann ein eine Stufe unter der Rücksitzbank bildendes Blech halbseitig verformt werden und durch Einschweißen eines entsprechenden neuen Blechteiles ersetzt werden. Der Rahmen des Fahrzeuges wird dabei nicht verzogen.

Eine besonders effektive Anpassung an die Gegebenheiten an der Karosserie ergibt sich, wenn die Querversteifung, insbesondere getrennte Auslegerarme, abgeknickt ist, so daß sie nicht geradlinig verlaufende Profile umfaßt. Dadurch kann ein Auslegerarm beispielsweise auf der besagten Stufe unterhalb der Rücksitzbank verlegt werden und muß nicht im Bereich des Unterbodens liegen. Eine effektive Verstärkung der Abknickstellen ergibt sich dann, wenn dort mehrere Rohrabschnitte konzentrisch ineinander verlaufen. Die Knickstellen stellen dann keine geschwächten Bereiche dar.

Wenn weitere Auslegerarme längs im Fahrzeug verlaufen und bei einem Seitenaufprall auf Torsion beansprucht werden, wird ein zusätzlicher Energieabbau erreicht. Zudem können die Auslegerarme in einfach zugänglichen Bereichen der Karosserie verlegt werden, ohne daß der Insassenraum von diesen quer durchdrungen werden muß. Eine Kombination von quer verlaufenden Auslegerarmen und solchen, die längs verlaufen und auf Torsion beansprucht werden, ergibt eine besonders hohe Stabilität.

Darüber hinaus kann vorgesehen sein, daß das Verstärkungsprofil und/oder der Auslegerarm als Rohrstücke ausgebildet sind, was die Herstellung eines solchen Seitenaufprallschutzes vereinfacht, da keine speziellen Verstärkungsprofilquerschnitte in Anpassung an das jeweilige Fahrzeug erstellt werden müssen.

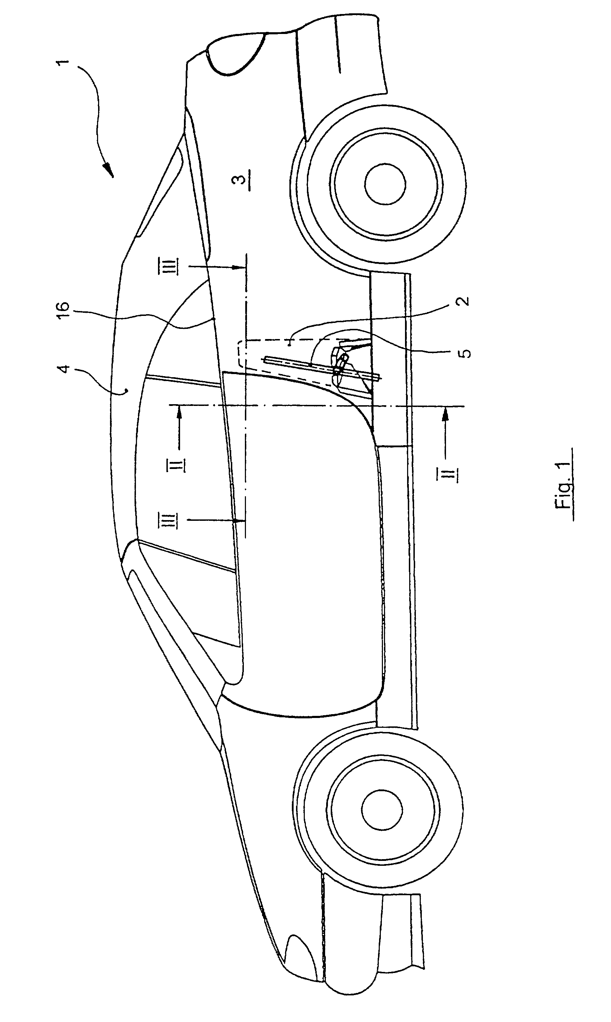

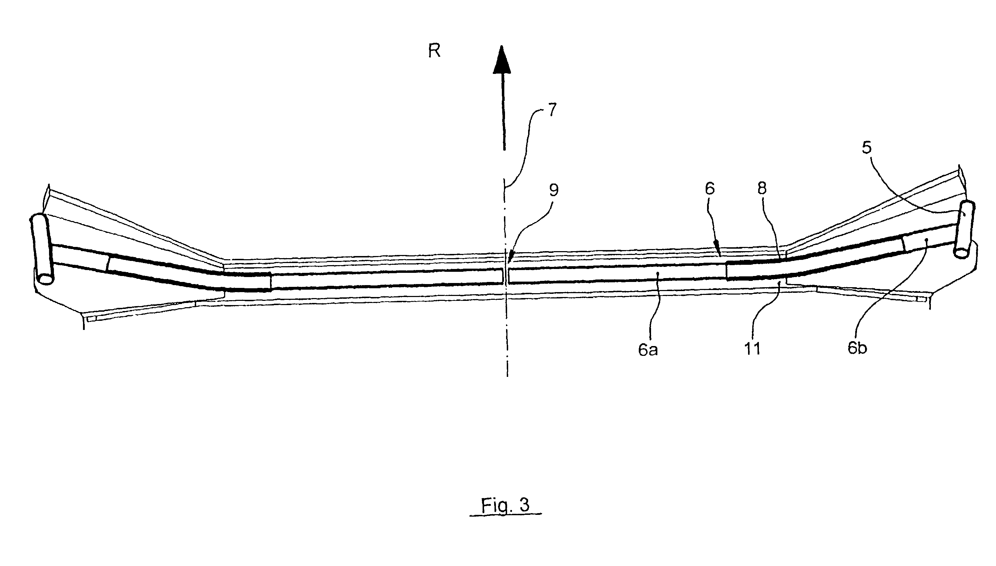

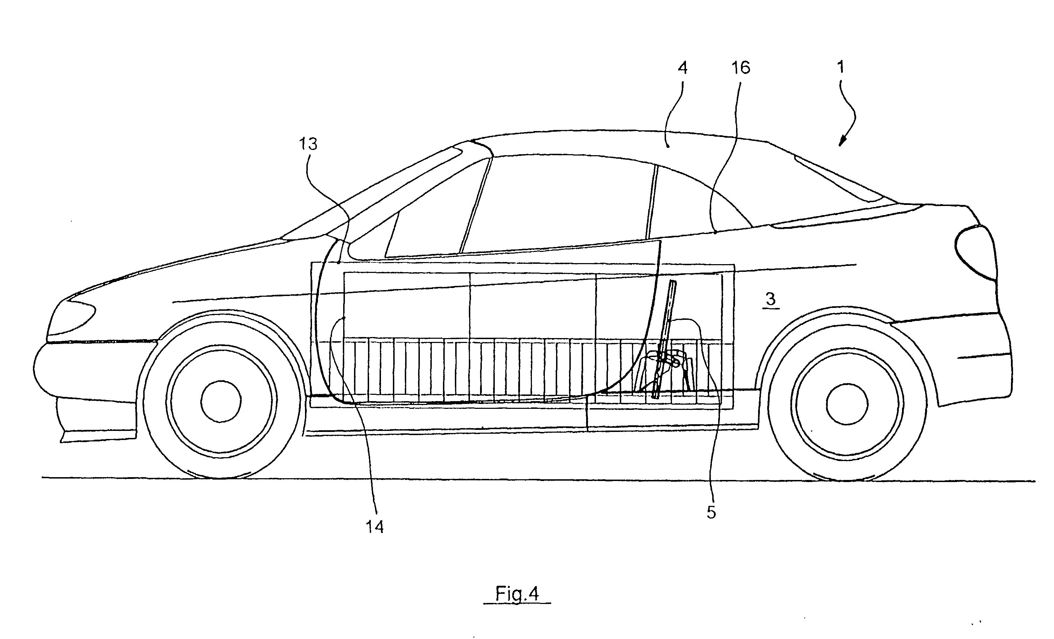

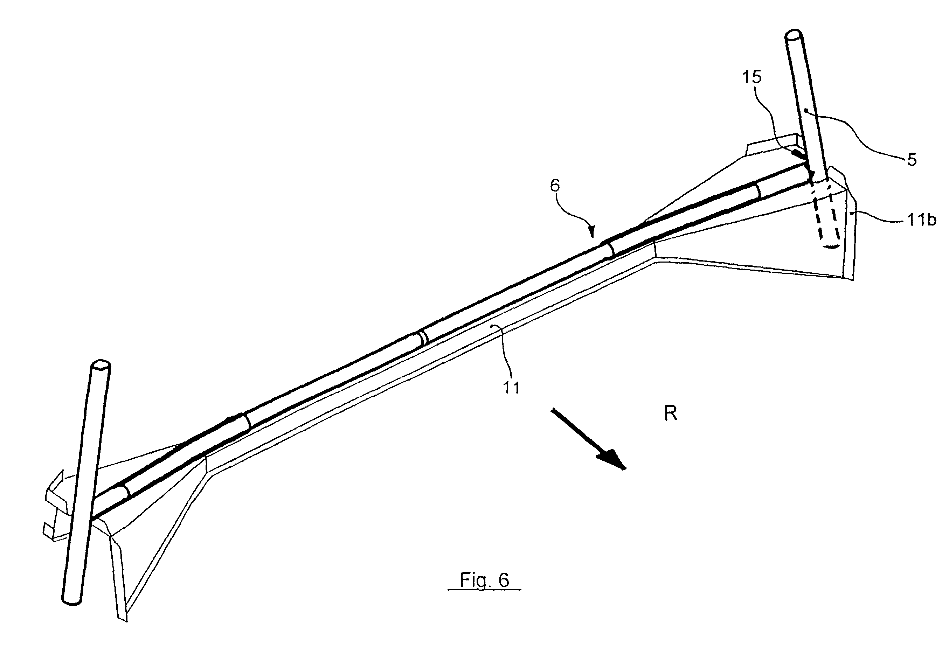

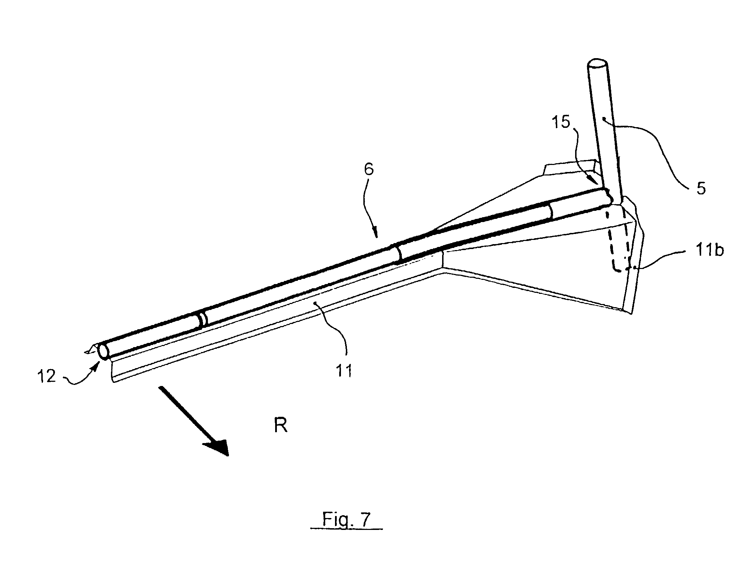

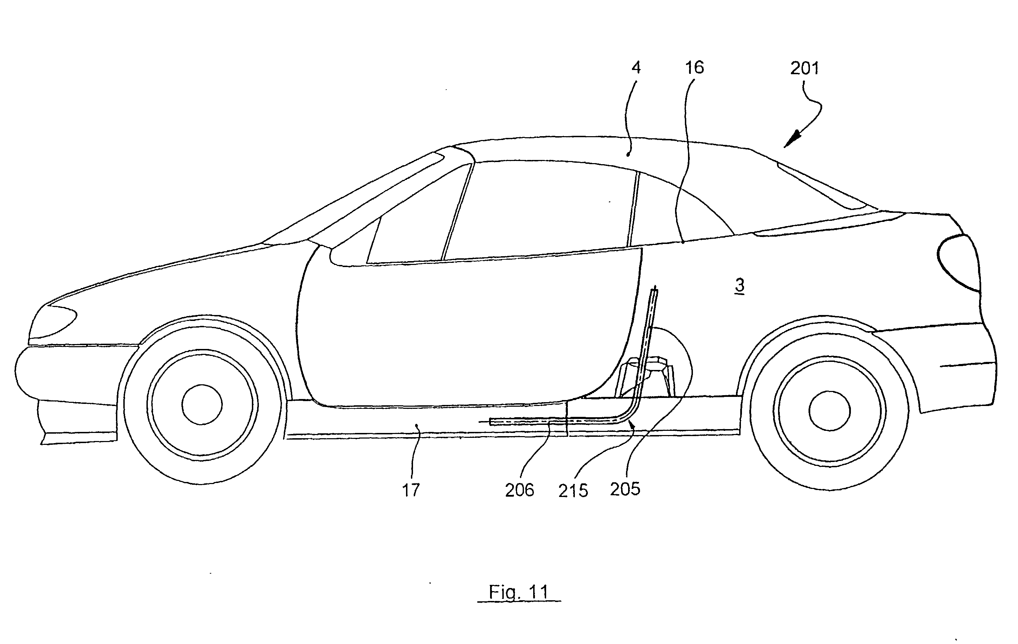

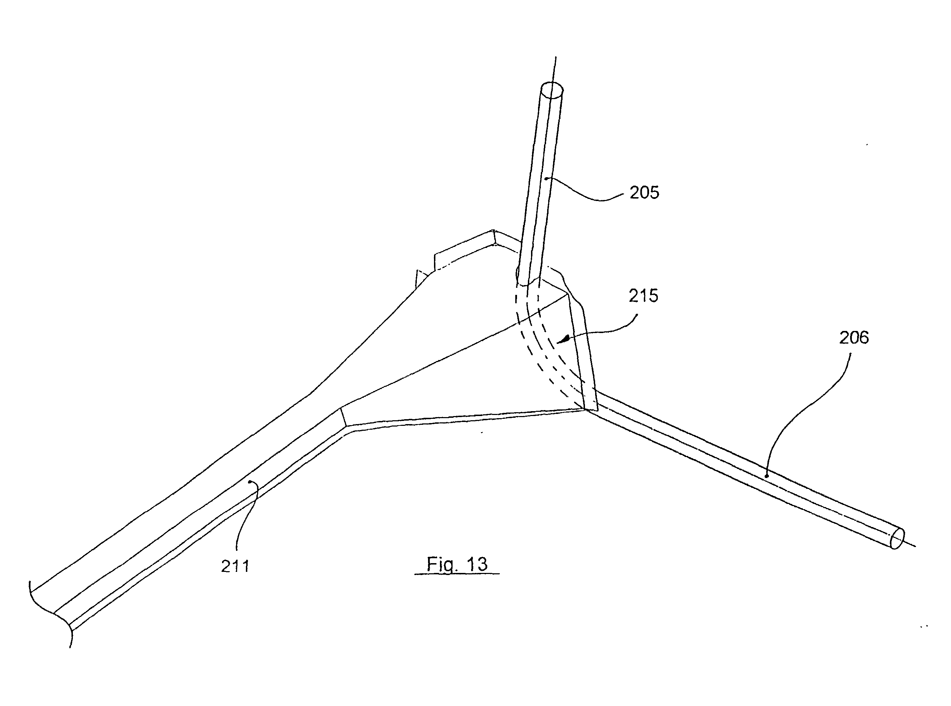

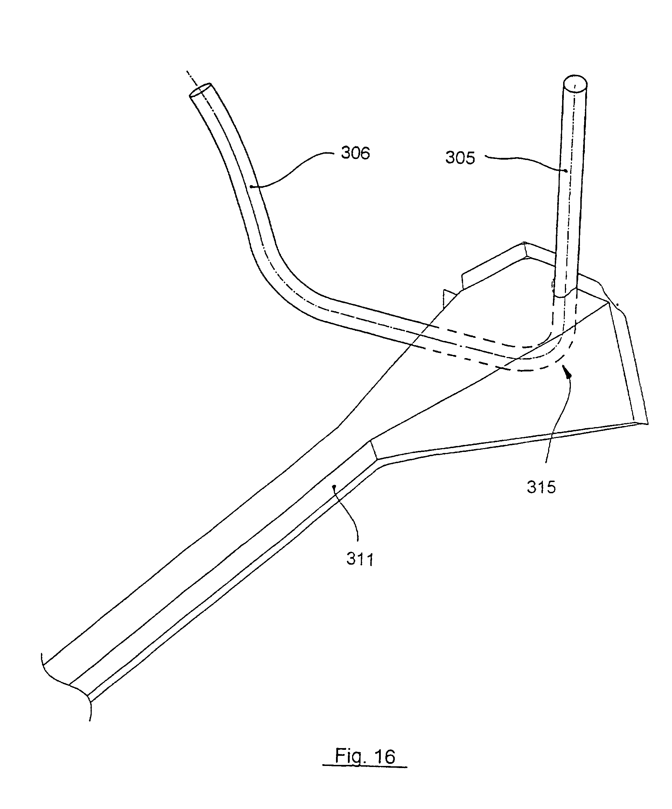

Weitere Merkmale und Vorteile ergeben sich aus der nachfolgenden Beschreibung mehrerer in der Zeichnung veranschaulichter Ausführungsbeispiele des Gegenstandes der Erfindung. Die Erfindung wird nur in den Figuren 1-7 gezeigt. Sie kann aber mit den Ausführungsbeispielen aus den Figuren 11-16 kombiniert werden. In der Zeichnung zeigen:
- Fig. 1: ein erfindungsgemäßes Kraftfahrzeug in einer ersten Ausführung mit sich in Richtung der Fahrzeuglängsmittelebene erstreckenden Auslegerarmen in Seitenansicht,
- Fig. 2: einen Schnitt durch das Fahrzeug nach Fig. 1 etwa entlang der Linie II-II in Fig. 1,
- Fig. 3: einen Schnitt etwa entlang der Linie III-III in Fig. 1,
- Fig. 4: eine ähnliche Ansicht wie Fig. 1 mit schematisch angedeuteten Normbarrieren zum Seitenaufprall,
- Fig. 5: eine Detailansicht aus Fig. 2 mit angedeuteten Barrieren,
- Fig. 6: eine perspektivische Ansicht der in den Fig. 2 und 3 dargestellten Verstärkungsprofile und Auslegerarme,
- Fig. 7: eine ähnliche Ansicht wie Fig. 6, wobei in der Darstellung der Auslegerarm abgebrochen ist,
- Fig. 8: ein zweites Ausführungsbeispiel in Seitenansicht,
- Fig. 9: eine ähnliche Ansicht wie Fig. 8 mit schematisch eingezeichneten Normbarrieren,
- Fig. 10: eine perspektivische Detailansicht auf ein Verstärkungsrohr und den Auslegerarm gemäß Fig. 8,
- Fig. 11: ein drittes Ausführungsbeispiel in Seitenansicht,
- Fig. 12: eine ähnliche Ansicht wie Fig. 11 mit eingezeichneten Normbarrieren,
- Fig. 13: eine perspektivische Detailansicht des Verstärkungsprofils und Auslegerarms nach Fig. 11,
- Fig. 14: ein viertes Ausführungsbeispiel in Seitenansicht,
- Fig. 15: eine ähnliche Ansicht wie Fig. 14 mit schematisch angedeuteter Normbarriere,
- Fig. 16: eine perspektivische Detailansicht des Verstärkungsprofils und Auslegerarmes nach Fig. 14.

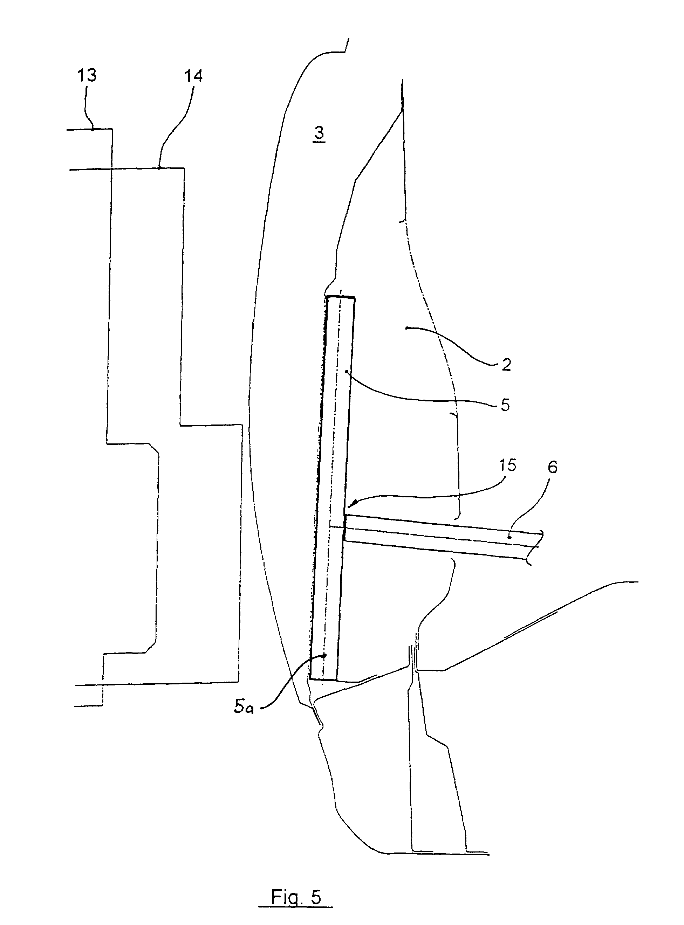

Ein erfindungsgemäßes Kraftfahrzeug 1,101,201,301 weist eine innenliegende B-Säule 2 auf, die in den Fig. 1 und 5 schematisch angedeutet ist und im wesentlichen durch ein in die Seitenwandung 3 eingeschweißtes Tiefziehteil gebildet ist. Diese B-Säule 2 weist keine Anbindung an das Dach 4 auf, sondern endet unterhalb der Fensterbrüstung 16.

Im Bereich der B-Säule 2 ist auf jeder Seite des Kraftfahrzeuges 1,101,201, 301 zumindest ein im wesentlichen vertikal verlaufendes Verstärkungsprofil 5,105, 205,305 angeordnet, von dem aus sich ein Auslegerarm 6,106,206, 306 erstreckt, der seitlich auf das Kraftfahrzeug 1,101,201,301 einwirkende Kräfte, wie sie bei Unfallstößen auf die Seitenwandungen 3 auftreten, von den vertikalen Verstärkungsprofilen 5,105,205,305 in entfernte Karosseriebereiche umleitet, die mit dem Auslegerarm 6,106,206,306 zumindest im Bereich von dessen dem Verstärkungsprofil 5,105,205,305 abgewandten Ende verbunden sind.

In den Ausführungsbeispielen ist das Verstärkungsprofil 5,105,205,305 direkt innerhalb der gebildeten B-Säule 2 angeordnet, was bei einer Ausbildung des Fahrzeugs als Cabriolet, wie hier dargestellt, vorteilhaft ist. Je nach Ausbildung des Kraftfahrzeugs sind jedoch auch andere Anordnungen der Verstärkungsprofile 5,105,205,305 im Bereich der B-Säule 2 möglich, beispielsweise können Verstärkungsprofile 5,105,205,305 die B-Säule beiderseits einfassen oder außen auf diese aufgeschweißt sein. Hier sind dem Fachmann unter Berücksichtigung der geometrischen und statischen Verhältnisse der Karosserie verschiedene Ausbildungen an die Hand gegeben.

Die Verstärkungsprofile 5,105,205,305 sind in den vorliegenden Ausführungsbeispielen - ebenso wie die Auslegerarme 6,106,206,306 - als runde Rohrstücke ausgebildet bzw. umfassen mehrere Rohrstücke. Dieses ist jedoch nicht zwingend. Auch Kastenprofile oder anders geformte, an die Form der Karosserie angepaßte Hohl- oder Vollprofile kommen in Frage. Die hier gezeigte Ausbildung von Rundrohren hat jedoch den Vorteil, ein fertigungstechnisch einfach zu handhabendes und vor allem billiges Produktionsteil zur Verfügung zu haben, das bei entsprechender Dickwandigkeit eine hohe Knickstabilität aufweist. Der gewählte runde Querschnitt bietet auch bei nicht genau im 90°-Winkel zur Seitenwandung 3 einwirkenden Kräften die gleiche Widerstandsfähigkeit wie bei senkrecht auf die Karosserieseite erfolgendem Aufprall.

Bevorzugt sollte das Vertikalprofil dickwandig ausgebildet sein, damit es punktuell wirkenden Kräften weitgehend unverformt widersteht und die einwirkenden Kräfte auf den Auslegerarm überleitet.

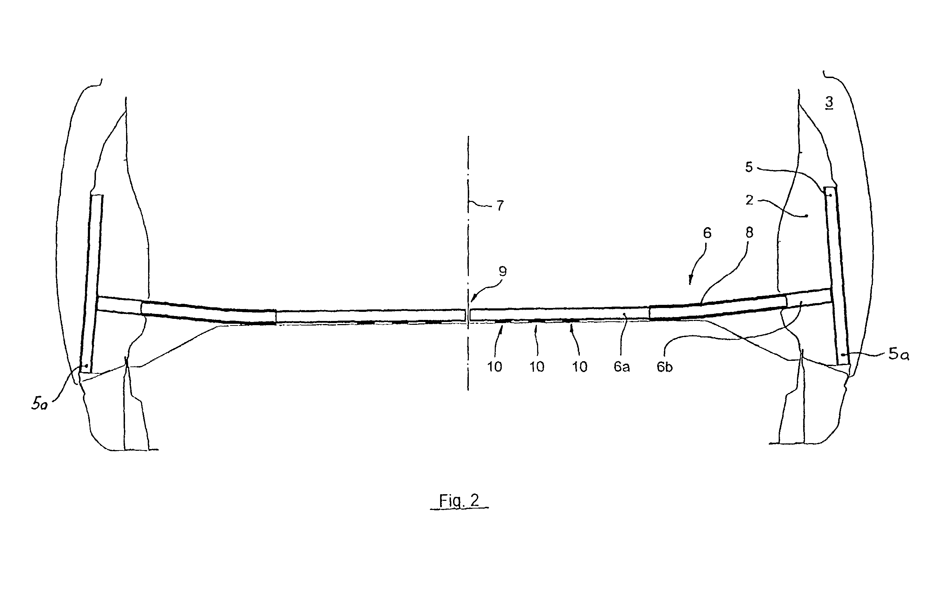

In dem in Fig. 1 bis 7 dargestellten ersten Ausführungsbeispiel (die Fahrtrichtung des Fahrzeuges ist dabei durch den Pfeil R angedeutet) ist das Verstärkungsprofil 5 mit einem Auslegerarm 6 verschweißt, wobei sowohl das Verstärkungsprofil 5 als auch der Auslegerarm 6 aus Rohrstücken gebildet sind. Der Verbindungsbereich 15 zwischen dem Auslegerarm 6 und dem Verstärkungsprofil 5 befindet sich oberhalb von dessen unterem Ende 5a, so daß der Ort der Krafteinleitung in den Auslegerarm 6 nach oben verlegt ist. Der in Fig. 2 dargestellte Auslegerarm 6 erstreckt sich von dem in der Seitenwandung 3 im Bereich der B-Säule 2 befindlichen Vertikalprofil 5 quer in Richtung der Fahrzeuglängsmittelebene 7. Dabei kann der Auslegerarm 6 - gegebenenfalls auch eine durchgängige Querversteifung -, um sich den geometrischen Verhältnissen im Fahrzeug 1 anzupassen, vom geradlinigen Verlauf abweichen und eine oder mehrere Knickstellen 8 um horizontale und/oder vertikale Achsen aufweisen. Gemäß dem Ausführungsbeispiel verläuft der Auslegerarm 6 von dem Verbindungsbereich 15 zunächst abwärts und nach hinten, um dadurch auf dem die Rücksitzbank tragenden Sockel festgelegt werden zu können. Eine Anpassung an einen anderen Verlauf ist gleichfalls möglich. Insbesondere im Bereich derartiger Knickstellen 8 ist der Auslegerarm 6 durch mehrere ineinander gesteckte Rohrabschnitte 6a,6b gebildet. Die Rohrabschnitte 6a, 6b sind miteinander verschweißt und bilden einen erheblichen Überlappungsbereich aus, der nicht nur die Knickstelle 8, sondern auch noch benachbarte Bereiche mit umfaßt, um hierdurch die Stabilität zu sichern. Die von beiden Seiten sich zur Fahrzeuglängsmittelebene 7 erstreckenden Auslegerarme 6 sind durch eine Mittelfuge 9 voneinander getrennt, so daß eine Stoßeinwirkung auf einen Auslegerarm 6 zumindest bei einem leichten Seitenaufprall nicht zu einer Auswärtsbewegung des anderen Auslegerarmes 6 in Richtung der gegenüber dem Aufprallpunkt gelegenen Fahrzeugseitenwandung 3 führt. Die Verformung kann sich dann auf eine Seite der Karosserie beschränken. Das Verstärkungsprofil 5 ist entlang seinem Verlauf zumindest bereichsweise mit der Seitenwandung 3 bzw. der B-Säule 2 verschweißt. Ebenso befinden sich an dem Auslegerarm 6 Befestigungsbereiche 10, an denen der Auslegerarm 6 mit der Karosserie fest verbunden, beispielsweise verschweißt, ist.

Im vorliegenden Ausführungsbeispiel ist der Auslegerarm 6 in einem an seinen Außenquerschnitt angepaßten Strukturprofil 11 gehalten, das seinerseits mit der Karosserie im Bereich des Sockels für die Rücksitzbank verschweißt ist. Das Strukturprofil 11 hat zur Aufnahme des runden Auslegerarms oberseitig einen halbrund ausgeformten Kanal 12, in den das Rohr 6a,6b des Auslegerarms 6 eingelegt und entlang seiner Außenwandung verschweißt ist. Auch eine anderweitige Befestigung, wie Verkleben oder Verschrauben, kommt in Frage. Das Strukturprofil 11 erstreckt sich ebenfalls quer über das Fahrzeug und ist randseitig an Flanschen 11b mit der Seitenwandung 3, insbesondere der B-Säule 2, verschweißt.

Bei einer seitlichen Krafteinwirkung auf die Seitenwandung 3 des Kraftfahrzeuges 1 wird je nach Höhe einer den Seitenaufprall simulierenden Barriere 13 (Barriere nach US-amerikanischer Norm US-FM VSS 571.214) bzw. 14 (Barriere nach europäischer Norm ECE-R95) ein Drehmoment um den Anschweißpunkt 15 des Auslegerarms 6 auf das vertikale Versteifungsprofil 5 einwirken, so daß auf den Auslegerarm 6 neben der der Fahrzeugmitte 7 zugewandten horizontalen Kraft auch eine vertikale Kraftkomponente einwirkt, die eine entsprechende Verformung der Fahrzeugbodengruppe im Verbindungsbereich zum Auslegerarm 6 nach sich zieht. Da bei einem extrem niedrigen Aufprall, etwa durch einen Sportwagen, auch eine vertikal aufwärts gerichtete Bewegung des dem Vertikalprofil 5 abgewandten Ende des Auslegerarmes 6 resultieren kann, ist die Verbindung zu dem Strukturprofil 11 entsprechend stabil auszuführen, damit sich auch bei einer derart wirkenden Kraft der Auslegerarm 6 nicht von dem Strukturprofil 11 und der darunter befindlichen Karosseriestufe abheben kann.

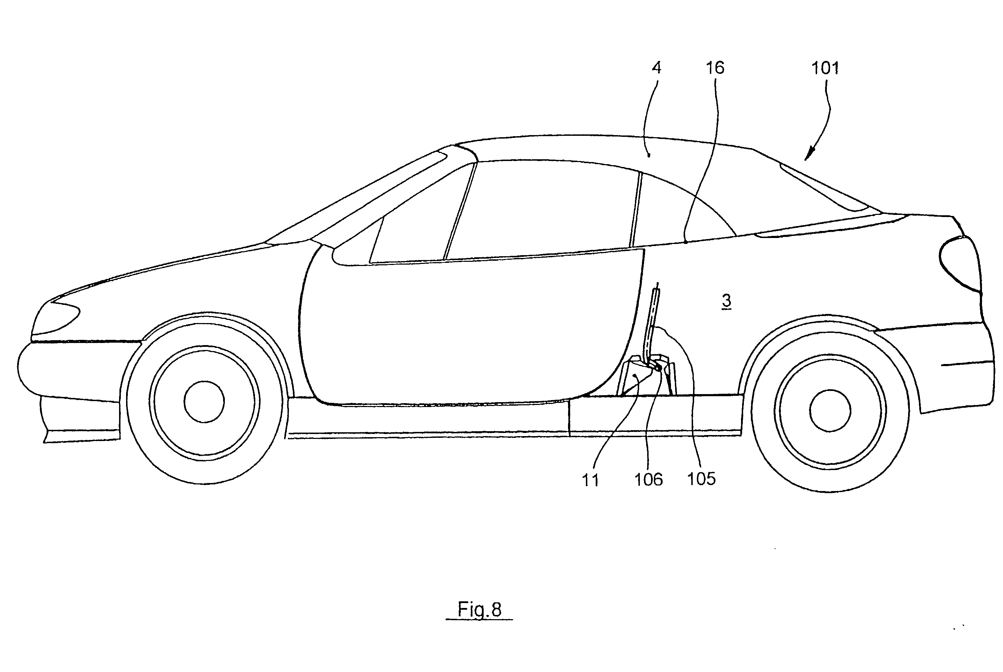

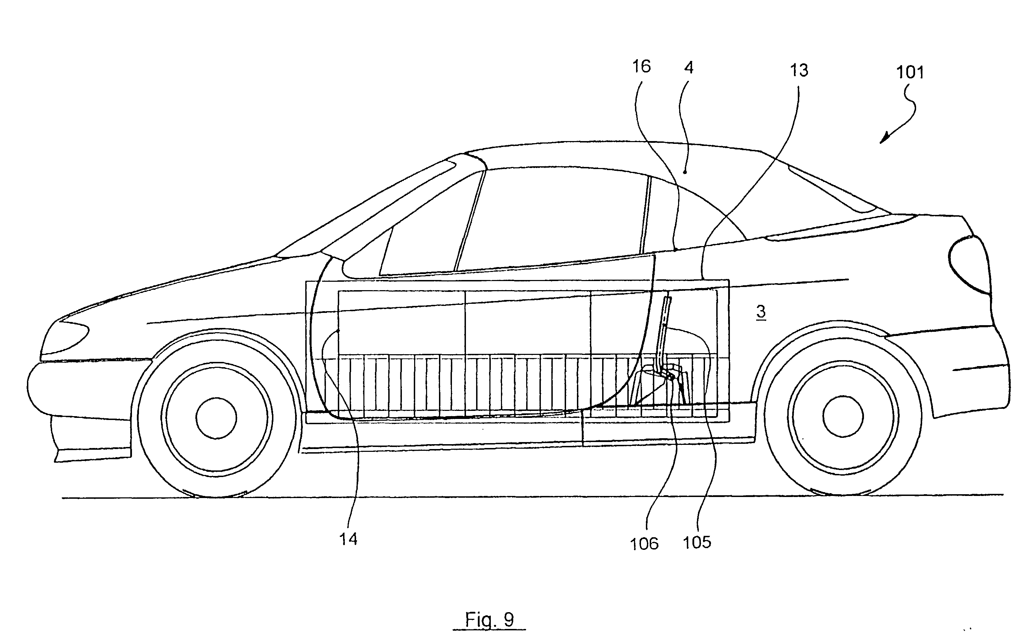

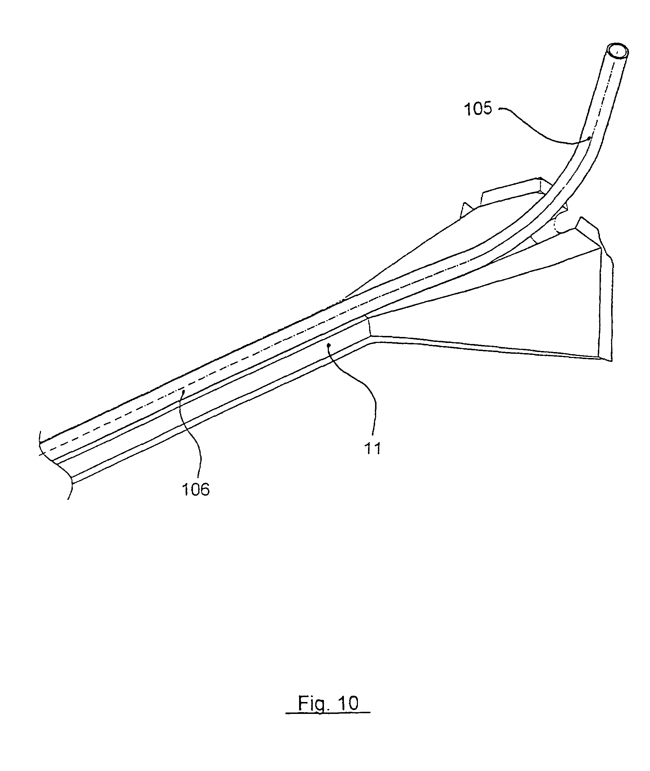

Das zweite Ausführungsbeispiel (Fig. 8 bis Fig. 10) zeigt einen prinzipiell gleichen Verlauf des Auslegerarmes 106 wie der des Auslegerarmes 6 im ersten Ausführungsbeispiel. Auch der Auslegerarm 106 erstreckt sich in Richtung der Fahrzeuglängsmittelebene 7, so daß die Kraftumlenkung in gleicher Weise wie im ersten Ausführungsbeispiel vorgenommen wird. Auch hier liegt der Auslegerarm 106 in einem Strukturprofil 11 und ist mit diesem zumindest bereichsweise verschweißt.
Der entscheidende Unterschied dieses Ausführungsbeispiels zum ersten liegt darin, daß der Auslegerarm 106 und das vertikale Verstärkungsprofil 105 einstückig ausgebildet sind und daher die gesamte Schutzvorrichtung gegen Seitenaufprall lediglich ein gebogenes Rohr als Bauteil umfaßt. Dieses ist fertigungstechnisch besonders einfach zu realisieren. Das vertikale Verstärkungsprofil 105 bildet daher den Endbereich des den Auslegerarm 106 darstellenden Rohrteils aus.

In dem dritten Ausführungsbeispiel (Fig. 11 bis Fig. 13) weist das Kraftfahrzeug 201 einen Seitenaufprallschutz auf, bei dem sich ein Auslegerarm 206 in den Türschweller 17 erstreckt und in Fahrtrichtung verläuft. Die Länge des Auslegerarmes 206 kann dabei je nach Fahrzeugstruktur variieren. Der Auslegerarm 206 ist wiederum einstückig mit dem vertikalen Verstärkungsprofil 205 ausgebildet, so daß hier wie im zweiten Ausführungsbeispiel wiederum für jede Fahrzeugseite nur ein entsprechend verformtes Rohr als Seitenaufprallschutz benötigt wird.

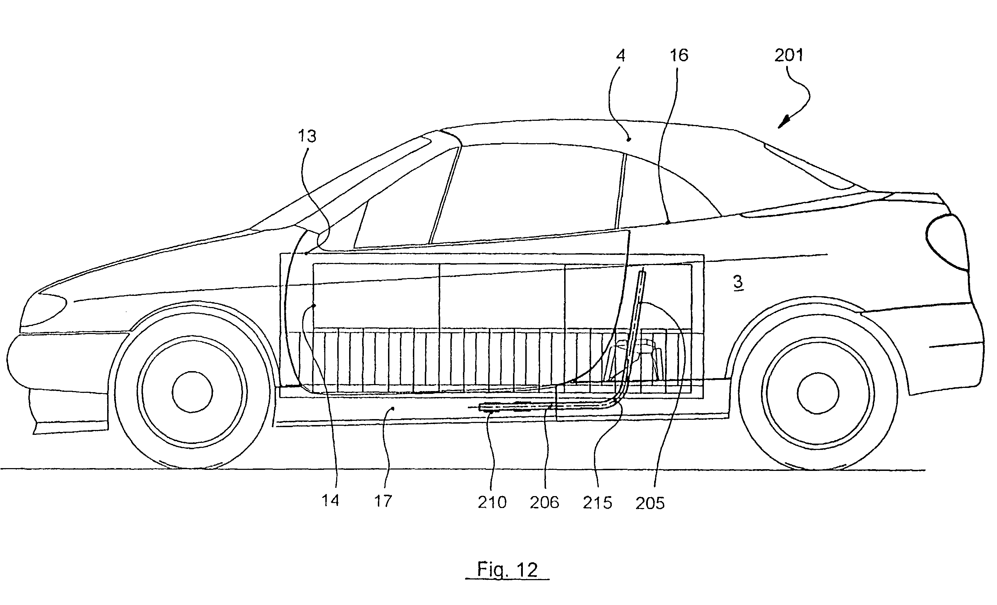

Bei einem Aufprall auf die Seite des Fahrzeuges 201 (in der Fig. 12 durch die Barrieren 13 und 14 angedeutet) wird das Vertikalprofil 205 einwärts gebogen, wobei der Bereich des Auslegerarmes 206 im Schweller 17 außerhalb der Aufprallzone liegt. Daher wird im Bereich des Überganges 215 zwischen dem vertikalen Verstärkungsprofil 205 und dem Auslegerarm 206 ein Drehmoment um die Fahrzeuglängsachse erzeugt, so daß der Auslegerarm 206, der in seinem dem vertikalen Verstärkungsprofil 205 abgewandten Bereich an Verbindungsstellen 210 mit dem Schweller 17 fest verschweißt ist, auf Torsion beansprucht wird und dadurch einen erheblichen Anteil der Aufprallenergie in Torsions-Verformung des Auslegerarmes 206 umsetzt. Wichtig ist hierbei, daß der Auslegerarm 206 außerhalb des Aufprallbereiches liegt, da ansonsten das gesamte Rohr, bestehend aus dem vertikalen Verstärkungsprofil 205 und dem Auslegerarm 206, in Richtung der Fahrzeuglängsmittelebene 7 verschoben würde und eine Torsionsbeanspruchung nicht stattfinden könnte.

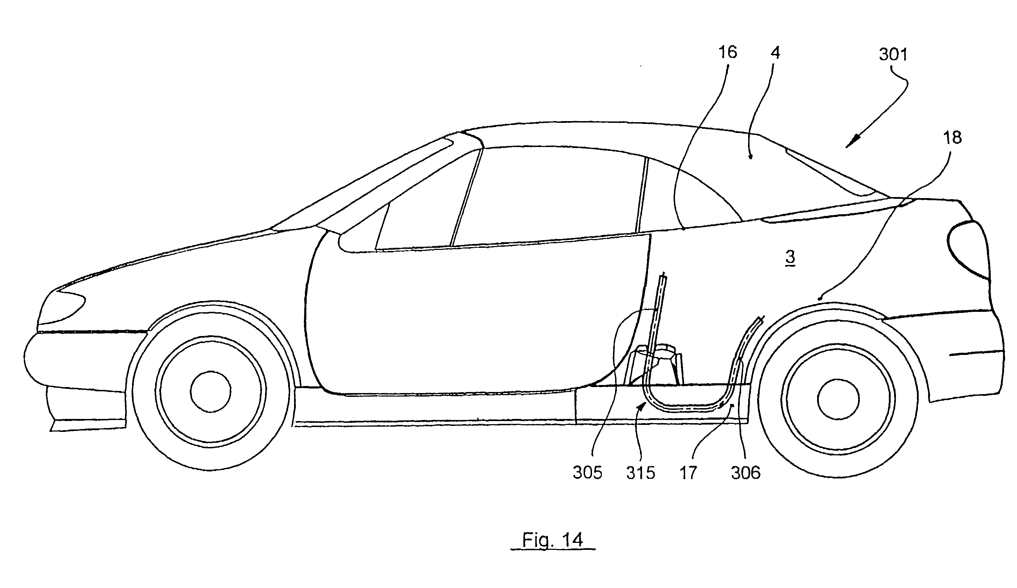

In einem vierten Ausführungsbeispiel (Fig. 14 bis Fig. 16) erstreckt sich wie im dritten Ausführungsbeispiel der Auslegerarm 306 ebenfalls in Längsrichtung des Fahrzeuges 301 und liegt damit parallel zur Seitenwandung 3. Wiederum ist das Verstärkungsrohr 305 mit dem Auslegerarm 306 einstückig ausgebildet, allerdings erstreckt sich der Auslegerarm 306 nicht in Fahrtrichtung, sondern in Richtung des hinteren Radkastens 18, an dem er abgestützt ist, nachdem er zuvor mit einem Teilstück durch den Türschweller 17 geführt ist.

Ein Querprofil 311 wirkt ebenso wie das Querprofil 211 im dritten Ausführungsbeispiel als zusätzliche Versteifung der Karosserie im Querbereich, nimmt jedoch nicht den Auslegerarm 306 auf. Dieser kann im Türschweller 17 ebenfalls über ein gesondertes Strukturprofil, das seiner äußeren Umrißgestalt angepaßt ist, gehalten sein (nicht eingezeichnet).

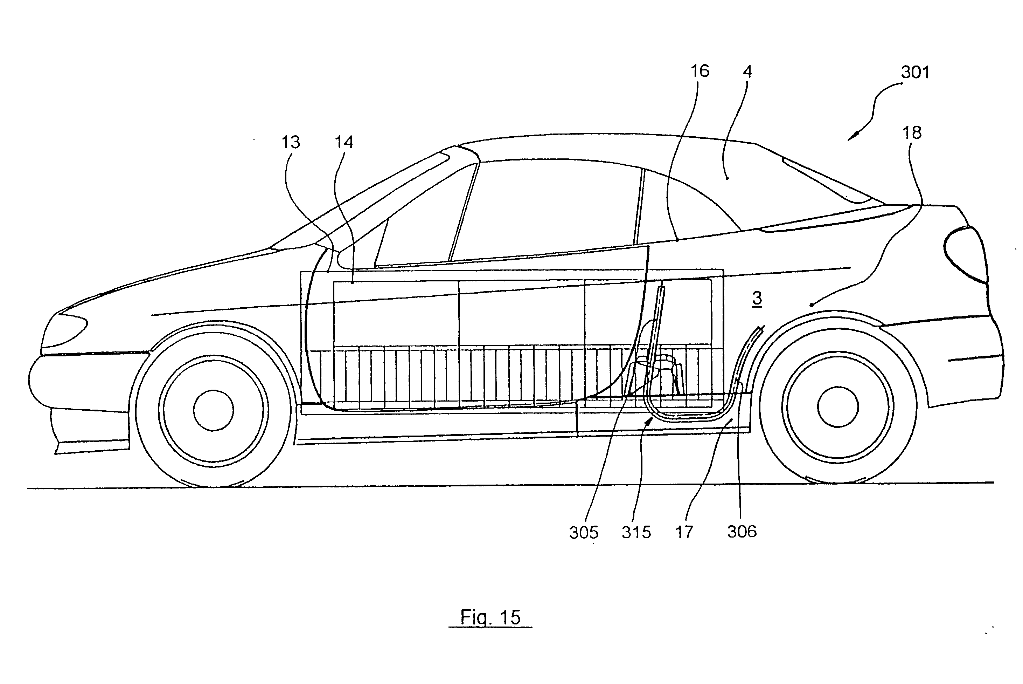

Der Auslegerarm 306 verläuft zumindest in seinem am Radhaus 18 abgestützten Bereich außerhalb der Aufprallzone, wie sie durch die Barrieren 13 bzw. 14 in Fig. 15 angedeutet ist. Der im Schweller 17 gelagerte Bereich des Auslegerarms 306 liegt ebenfalls außerhalb der Aufprallzone.

Bei seitlicher Krafteinwirkung auf das vertikale Verstärkungsprofil 305 wird wiederum ein Drehmoment um den Verbindungsbereich 315 zwischen dem vertikalen Verstärkungsrohr 305 und dem Auslegerarm 306 ausgeübt, so daß eine Torsion des Auslegerarmes 306 resultiert. Da der Auslegerarm 306 am Radhaus verschweißt ist, ist ein Abheben dieses Rohrteils von dem das Radhaus 18 bildenden Außenblech verhindert, statt dessen wird durch das Drehmoment um die Fahrzeuglängsachse einerseits der Auslegerarm 306 tordiert, andererseits kann das Außenblech des Radhauses 18 nach innen deformiert werden und damit zum Energieabbau beitragen.

Wiederum sind das Verstärkungsprofil 305 und der Auslegerarm 306 einstückig ausgebildet, dieses ist jedoch auch bei einer Anordnung des Auslegerarmes in Fahrzeuglängsrichtung nicht zwingend, sondern hier käme auch ein Verschweißen, Verschrauben, Verkleben oder eine andere bekannte Befestigung der Rohrabschnitte in Frage. Zumindest in seinem dem Verstärkungsprofil 305 abgewandten Endbereich muß der Auslegerarm 306 hinreichend an den Karosserieblechen befestigt sein, um diese in jedem Fall an der Deformation zu beteiligen. Im Torsionsbereich, also im Schweller 17, ist eine solche Befestigung zumindest in den der Abknickstelle 315 vom Vertikalrohr abgewandten Bereichen nötig.

Es ist auch möglich, ein vertikales Verstärkungsprofil 5,105,205,305 mit mehreren unterschiedlichen Auslegerarmen 6,106,206,306 zu verbinden, um insbesondere auch bei Aufprallfällen, die den Schwellerbereich mit betreffen, eine hinreichende Absicherung gegen seitlich einwirkende Kräfte zu erreichen. So kann etwa ein Torsionsrohr 206 mit einem sich in das hintere Radhaus 18 erstreckenden Auslegerarm 306 oder auch mit einem quer zur Fahrtrichtung angeordneten Auslegerarm 6 oder 106 kombiniert sein. Ein von den Ausführungsbeispielen abweichender Verlauf von Auslegerarmen, etwa schräg in der Bodengruppe, ist, einzeln oder in Kombination, ebenfalls möglich.

In jedem Fall sind die dargestellten Sicherungsmaßnahmen hinsichtlich eines Seitenaufpralls ohne optische Beeinträchtigung des Fahrzeuges möglich. Die Seitenscheiben können weiterhin rahmenlos geführt sein, ein Überrollbügel muß nicht installiert werden. Die Auslegerarme 6,106,206,306 erstrecken sich in ohnehin vorhandenen Karosseriehohlräumen oder sind (6,106) auf der den Boden unter dem Fondsitz bildenden Stufe gelagert. Selbstverständlich ist ein derartiger Seitenaufprallschutz auch in Fahrzeugen einsetzbar, bei denen die B-Säule eine Dachanbindung aufweist.

## Patentansprüche

1. Personenkraftfahrzeug mit einer B-Säule, insbesondere Coupé- oder Cabriolet-Fahrzeug (1;101) mit den Insassenraum unterhalb einer Fensterbrüstung (16) begrenzenden seitlichen Karosseriewandungen (3), innerhalb deren vertikaler Erstrekkung jeweils die B-Säule (2) angeordnet ist, wobei dieser jeweils vertikal ausgerichtete Verstärkungsprofile (5) zur Aufnahme von seitlich auf das Fahrzeug (1;101) einwirkenden Kräfte zugeordnet sind mit zumindest einem zwischen den B-Säulen im wesentlichen quer zum Fahrzeug verlaufenden Auslegerarm, **dadurch gekennzeichnet, daß** der Auslegerarm (6) in einem von dem unteren Ende (5a) des Verstärkungsprofils (5) beabstandeten Verbindungsbereich (15) mit diesem verbunden ist.

2. Personenkraftfahrzeug nach Anspruch 1, **dadurch gekennzeichnet, daß** sich jeweils quer von dem Verstärkungsprofil (5) in Richtung zur vertikalen Fahrzeuglängsmittelebene (7) ein Auslegerarm (6) erstreckt und die Auslegerarme (6) im Bereich der vertikalen Fahrzeuglängsmittelebene (7) voneinander beabstandet sind.

3. Personenkraftfahrzeug nach Anspruch 1 oder 2, **dadurch gekennzeichnet, daß** die Auslegerarme (6) in Anpassung an ihre Festlegung im Bodenbereich der Fahrzeugkarosserie zumindest bereichsweise abgeknickt sind.

4. Personenkarftfahrzeug nach Anspruch 3, **dadurch gekennzeichnet, daß** ein Auslegerarm (6) zumindest in einem Abknickbereich mehrere konzentrisch ineinander angeordnete Rohrabschnitte (6a;6b) umfaßt.

5. Personenkraftfahrzeug nach einem oder mehreren der Ansprüche 1 bis 4, **dadurch gekennzeichnet, daß** das Verstärkungsprofil (5) jeweils innerhalb der B-Säule (2) angeordnet ist und ein Rohrstück ausbildet.

6. Personenkraftfahrzeug nach einem der Ansprüche 1 bis 5, **dadurch gekennzeichnet, daß** ein weiterer Auslegerarm (206;306) so ausgerichtet ist, daß er bei seitlicher Krafteinwirkung auf das Verstärkungsprofil (205;305) auf Torsion beansprucht wird.

7. Personenkraftfahrzeug nach Anspruch 6, **dadurch gekennzeichnet, daß** sich der weitere Auslegerarm (206;306) in Fahrzeuglängsrichtung einer Seitenwandung (3) folgend erstreckt.

8. Personenkraftfahrzeug nach einem der Ansprüche 6 oder 7, **dadurch gekennzeichnet, daß** der weitere Auslegerarm (206;306) den Längsträger (17) eines Türschwellers durchzieht.

9. Personenkraftfahrzeug nach einem der Ansprüche 6 bis 8, **dadurch gekennzeichnet, daß** der weitere Auslegerarm (206;306) sich mit seinem dem Verstärkungsprofil (205;305) abgewandten Ende bis an bzw. in ein Radhaus (18) erstreckt.

10. Personenkraftfahrzeug nach einem oder mehreren der Ansprüche 1 bis 9, **dadurch gekennzeichnet, daß** das Verstärkungsprofil (5;205;305) jeweils innerhalb der B-Säule (2) angeordnet ist.

11. Personenkraftfahrzeug nach einem oder mehreren der Ansprüche 1 bis 10, **dadurch gekennzeichnet, daß** das Verstärkungsprofil (5;205;305) ein Rohrstück ausbildet.

## Claims

1. Passenger car having a B pillar, particularly a convertible vehicle (1; 101) having lateral bodywork walls (3) which define the passenger compartment below a window sill (16) and within whose vertical extent the B pillars (2) are respectively arranged, the latter having associated with them respective vertically aligned reinforcing profiles (5) to receive forces acting laterally on the vehide (1; 101), there being at least one cantilever arm extending between the B pillars substantially transversely to the vehicle, **characterised in that** the cantilever arm (6) is connected to the reinforcing profile (5) in a connecting region (15) which is spaced away from the bottom end (5a) of said reinforcing profile (5).

2. Passenger car according to claim 1, **characterised in that** a cantilever arm (6) extends in each case transversely from the reinforcing profile (5) towards the vertical longitudinal centre plane (7) of the vehicle and the cantilever arms (6) are spaced away from one another in the region of the vertical longitudinal centre plane (7) of the vehicle.

3. Passenger car according to claim 1 or 2, **characterised in that**, to adjust them to their fixings in the floor region of the vehide bodywork, the cantilever arms (6) are bent, at least in certain regions.

4. Passenger car according to claim 3, **characterised in that** a cantilever arm (6) comprises, at least in the region of a bend, a plurality of sections of tube (6a, 6b) which are arranged concentrically one inside the other.

5. Passenger car according to any of claims 1 to 4, **characterised in that** each reinforcing profile (5) is arranged inside the B pillar (2) and is in the form of a length of tubing.

6. Passenger car according to one of daims 1 to 5, **characterised in that** a further cantilever arm (206; 306) is so aligned that it is stressed in torsion if a lateral force acts on the reinforcing profile (205; 305).

7. Passenger car according to claim 6, **characterised in that** the further cantilever arm (206; 306) extends in the longitudinal direction of the vehide to follow a side-wall (3).

8. Passenger car according to either of claims 6 and 7, **characterised in that** the further cantilever arm (206; 306) passes through the longitudinal bodywork beam (17) forming a door sill.

9. Passenger car according to one of daims 6 to 8, **characterised in that** the end of the further cantilever arm (206; 306) remote from the reinforcing profile (205; 305) extends to or into a wheel well (18).

10. Passenger car according to any of daims 1 to 9, **characterised in that** the reinforcing profiles (5; 205; 305) are arranged inside respective B pillars (2).

11. Passenger car according to any of daims 1 to 10, **characterised in that** the reinforcing profile (5; 205; 305) is in the form of a length of tubing.

## Revendications

1. Véhicule de tourisme avec un pied-droit B, notamment un coupé ou un cabriolet (1, 101), comportant des parois latérales (3) de carrosserie qui délimitent l'habitacle en dessous de la ligne des appuis des fenêtres, et présentant chacune une étendue verticale à l'intérieur de laquelle est disposé le pied-droit B (2) correspondant, des profilés verticaux de renforcement (5) étant associés à ces parois de carrosserie pour prendre en charge les forces agissant latéralement sur le véhicule (1, 101) avec au moins un bras en porte-à-faux situé entre les pieds-droits B et orienté essentiellement transversalement par rapport au véhicule.
**caractérisé en ce que**
le bras en porte-à-faux (6) est relié au profilé de renforcement (5) dans une zone de liaison (15) située à une certaine distance de l'extrémité inférieure (5a) de ce profilé.

2. Véhicule de tourisme selon la revendication 1,
**caractérisé en ce que**
un bras en porte-à-faux (6) part transversalement de chaque profilé de renfort (5) en direction du plan longitudinal vertical médian (7) du véhicule, les deux bras en porte-à-faux (6) étant espacés l'un de l'autre dans la zone du plan vertical médian (7).

3. Véhicule de tourisme selon la revendication 1 ou 2,
**caractérisé en ce que**
les bras en porte-à-faux (6), pour adapter leur fixation dans la zone du plancher de la carrosserie du véhicule sont cintrés au moins localement.

4. Véhicule de tourisme selon la revendication 3,
**caractérisé en ce que**
un bras en porte-à-faux (6) comprend, au moins dans une zone où il est cintré, plusieurs parties tubulaires (6a ; 6b) montées concentriquement les unes dans les autres.

5. Véhicule de tourisme selon une ou plusieurs revendications 1 à 4,
**caractérisé en ce que**
le profilé de renforcement (5) est monté à l'intérieur du pied-droit B (2) correspondant et a la forme d'une pièce tubulaire.

6. Véhicule de tourisme selon une des revendications 1 à 5,
**caractérisé en ce que**
un autre bras en porte-à-faux (206 ; 306) est orienté de manière à être sollicité en torsion quand une force latérale s'exerce sur le profilé de renforcement (205 ; 305).

7. Véhicule de tourisme selon la revendication 6,
**caractérisé en ce que**
l'autre bras en porte-à-faux (206 ; 306) suit une paroi latérale (3) en étant orienté selon la direction longitudinale du véhicule.

8. Véhicule de tourisme selon la revendication 6 ou 7,
**caractérisé en ce que**
l'autre bras en porte-à-faux (206 ; 306) passe à travers le longeron (17) d'un seuil de portière.

9. Véhicule de tourisme selon une des revendications 6 à 8,
**caractérisé en ce que**
l'autre bras en porte-à-faux (206 ; 306) a son extrémité éloignée du profilé de renforcement (205 ; 305) qui s'étend jusque sur ou dans un logement de'roue (18).

10. Véhicule de tourisme selon une des revendications 1 à 9,
**caractérisé en ce que**
le profilé de renforcement (5 ; 205 ; 305) est disposé à l'intérieur du pied-droit B (2) correspondant.

11. Véhicule de tourisme selon une ou plusieurs des revendications 1 à 10,
**caractérisé en ce que**
le profilé de renforcement (5 ; 205 ; 305) est une pièce tubulaire.
